# EUROPEAN PATENT SPECIFICATION

(11) **EP 2 828 076 B1**
(45) Date of publication and mention of the grant of the patent: **30.12.2015**
(21) Application number: 13722581.9
(22) Date of filing: 18.03.2013
(51) Int. Cl.: B31F 1/07

(54) **TRANSMISSION DEVICE FOR EMBOSSING ROLLERS**
ÜBERTRAGUNGSVORRICHTUNG FÜR PRÄGEWALZEN
DISPOSITIF DE TRANSMISSION POUR CYLINDRES GAUFREURS

(30) Priority: 21.03.2012 IT FI20120061
(43) Date of publication of application: 28.01.2015
(73) Proprietor: Futura S.p.A, Fraz. Guamo (IT)
(72) Inventor: PERINI, Fabio, I-55049 Viareggio (LU) (IT)
(74) Representative: Mincone, Antimo
(86) International application number: PCT/IT2013/000078
(87) International publication number: WO 2013/140427

(56) References cited:
- DE-A1- 2 023 566
- DE-A1-102006 006 008
- DE-U1- 8 313 265
- US-A1- 2007 000 615

## Description

The present invention relates to a transmission device for embossing rollers. The closest prior art is considered US-2007000615. It is known that embossing consists in a mechanical process used to impress a plurality of projections on yieldable materials, such as webs or "plies" of paper. For this purpose, the material to be embossed is made to pass through a calender comprising a steel roll provided with substantially punctiform reliefs and an opposed smooth rubber roller. The steel roll is connected to respective handling means while the rubber roll is idle on the respective support axle. The embossing results from the passage of the material between the rollers of the calender, where a compression of the material, without perforation, takes place in correspondence with the reliefs of the steel roll. This operation is generally performed on a plurality of single plies, which are then joined together by gluing and then are wound on tubular cardboard cores to form logs in machines commonly called "rewinders".

It is also known that the effect of the embossing on the paper webs is closely related to the surface characteristics of the embossing rollers, or to the arrangement and dimensions of the above-mentioned reliefs. The embossing rolls often have designs or patterns and it can be necessary to replace them even on a daily frequency to vary designs or patterns on the paper material subjected to embossing.

In order to vary the type of embossing according to specific production needs, it is possible to replace one or more embossing rollers with others provided with differently shaped and / or dimensioned reliefs. For this purpose, it is necessary to disconnect these rollers from the respective driving means. The main purpose of the present invention is to propose a transmission device for embossing rolls which allows to carry out the change of the rollers in a particularly simple and safe way from the operative point of view and to enable a more efficient automation of the connection between the embossing and the respective drive member.

This result is achieved, according to the present invention, by adopting the idea of making an apparatus having the features indicated in claim 1. Other features of the present invention are the subject of the dependent claims.

Thanks to the present invention, it is possible to replace the embossing rollers in a simple, reliable and safe way, without the risk of compromising the structural integrity of the rollers or that of the structures servicing the rollers. Moreover, thanks to the present invention it is possible to connect the axis of the embossing rollers with the axis of the corresponding drive members without requiring any manual intervention for the alignment of said axes and then automatically compensating the possible alignment errors.

These and other advantages and features of the present invention will be best understood by anyone skilled in the art thanks to the following description and to the attached drawings, given by way of example but not to be considered in a limiting sense, in which:
- Fig.1 is a schematic side view of an embossing unit to which can be applied a transmission device in accordance with the present invention;
- Fig.2 is a schematic plan view, in transparency, of an embosser provided with a transmission device in accordance with the present invention at the motor side of an embossing roller, in a configuration of transmission engaged;
- Figs.3, 4 and 5 are schematic side views of the assembly shown in Fig.2 in three different configurations;
- Fig.6 shows the group of Fig.5 seen from the opposite side;

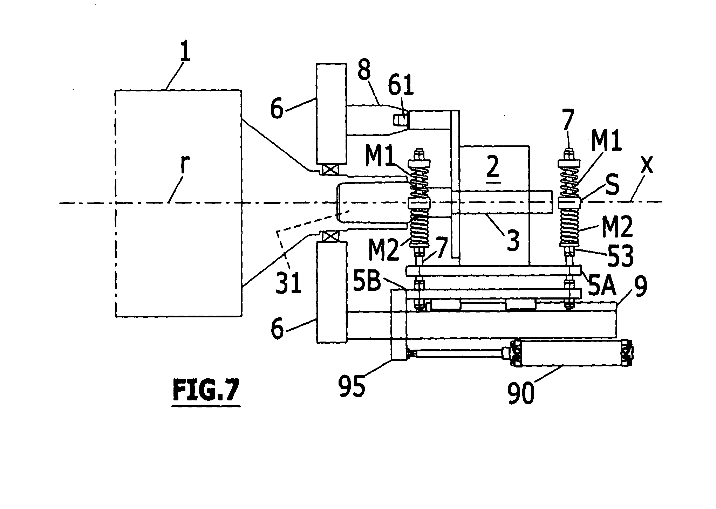

- Fig.7 shows the same view of Fig.6 in which the columns (51) are not illustrated to the arrangement of the springs (M1) and (M2) make better visible;
- Fig. 8 is a view similar to that of Fig.7 but referring to a further embodiment of a device in accordance with the present invention.

A device in accordance with the present invention is applicable to embossing units comprising at least one embossing roller (1) with a motor side that has a recess (100) shaped to be axially engaged by a hydraulically expandable drive pin (31). The drive expandable pin (31) is mounted on the shaft (3) connected to a drive member (2) that permits its rotation about the respective longitudinal axis (x) with a predetermined angular speed. Therefore, the drive torque is transmitted by the drive member (2) to the embossing roller (1) through the shaft (3) and the drive pin (31) once the latter is inserted and aligned axially with the recess (100) of the roller (1).

Conversely, the drive member (2) and the embossing roller (1) are decoupled by extracting the drive pin (31) from the recess (100). The hydraulic expansion of the drive pin (31) is actuated after the pin has been inserted in the recess (100) and before operating the drive member (2). Conversely, for disconnecting the roller (1) by the drive member (2), the drive pin (31) is contracted for its removal from the recess (100).

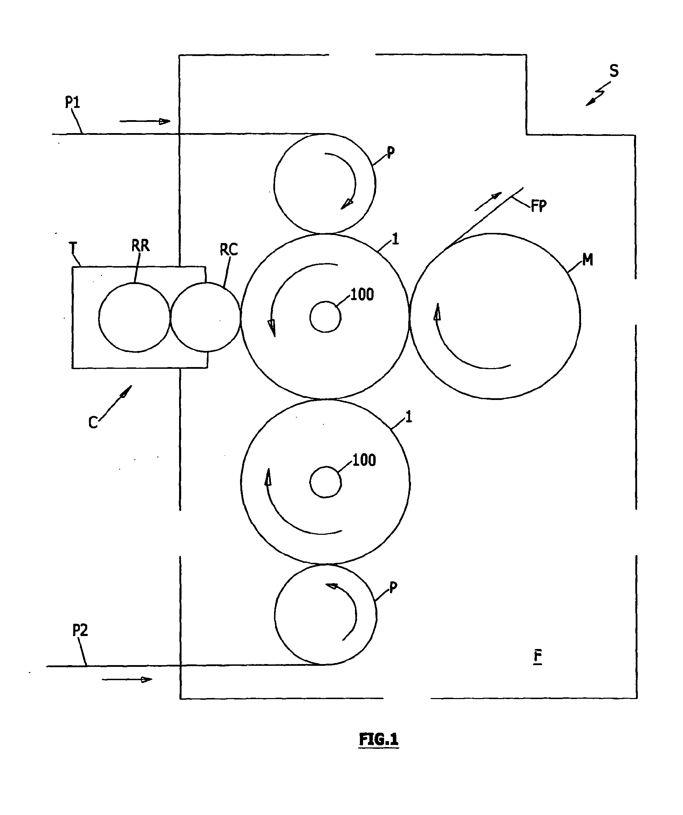

For example, the embossing unit can be of the type shown in Fig 1, wherein a fixed structure (S) supports two embossing rollers (1) whose respective axes are horizontal, that is, oriented orthogonally to the sides (F) of same structure, arranged one above the other. The two embossing rollers (1) cooperate each with a corresponding pressure roller (P) normally coated with an elastically yielding material, for example rubber. On one of the embossing rollers (1), the upper one in Fig 1, acts a sizing unit (C) comprising a tank of glue (T), an anilox roller (RR) which picks up the glue from the tank (T), and a cliché roll that receives the glue from the anilox roll (RR) and applies it on a first paper ply or web (P1). The latter is already embossed since it has already passed between the roller (1) and the overlying presser roller (7). A second ply (P2) is embossed by the lower roller (1) in cooperation with the corresponding pressure roller (P) and is coupled permanently with the first layer (P1) thanks to the pressure exerted by a "marrying roll" (M) acting on the upper roller (1) on the opposite side with respect to the sizing unit (C). The finished product, consisting of the plies (P1) and (P2) embossed and glued together, is indicated by the reference "FP".

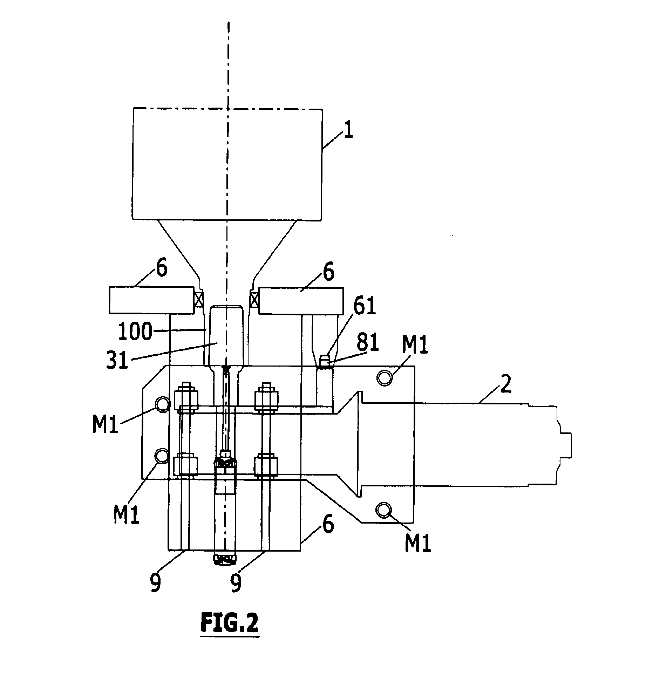

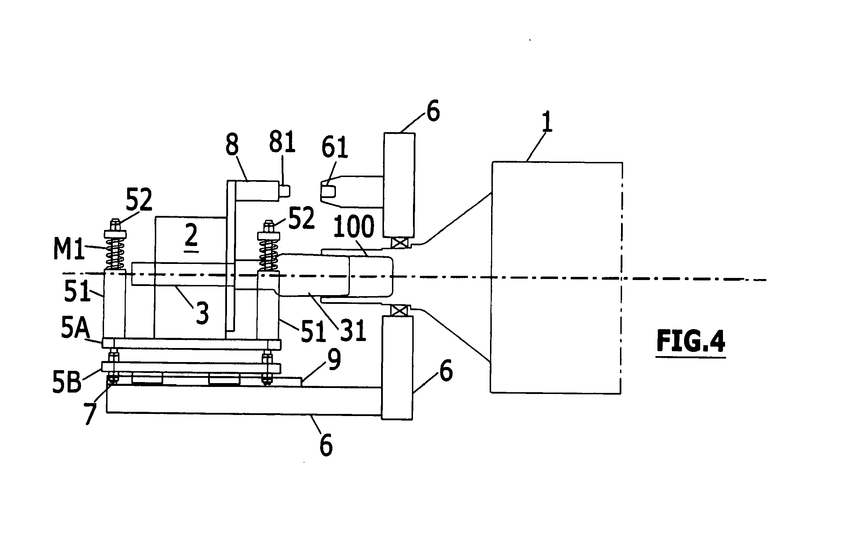

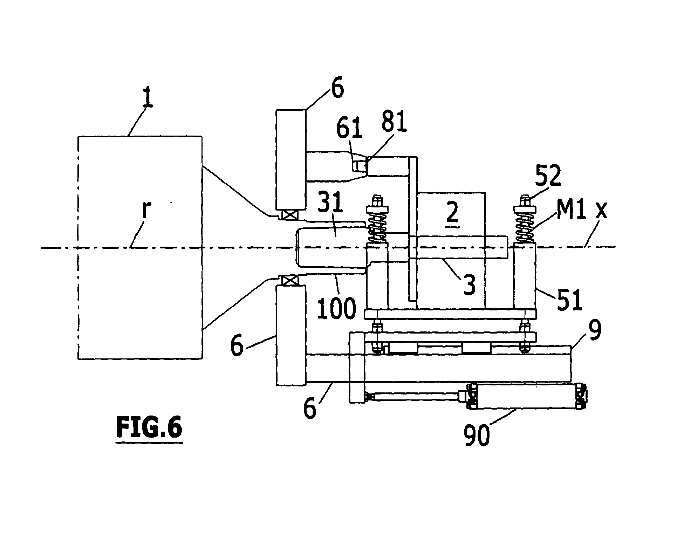

According to the example shown in Figs.2-6 of the attached drawings, the drive member (2) is fixed on a base (5A). The said base (5A) is a plate of predetermined thickness with a square or rectangular shape in plan view, on whose face facing upwards, i.e. on the face on which the drive member (2) is located, are fixed four columns (51) . Each column (51), which consists of a tubular body of predetermined height and thickness, is fixed in correspondence of a vertex of the base (5A). Inside each column (51) there is coaxially fixed, at a predetermined height, by means of a transverse pin not visible in the drawings, a cylindrical sleeve (S) of predetermined length, whose upper and lower bases support the ends of two springs (M1 , M2). More in particular, the lower base of the spring (M1) rests on the upper base of the sleeve (S); the upper base of the spring (M2) rests on the lower base of the sleeve (S). The two springs (M1, M2) and the sleeve (S) are coaxial with each other and are crossed by a rod (7) of predetermined diameter having each end threaded for a predefined length. The sleeve (S) has a hole coaxial thereto of sufficient diameter to be apt to slide freely on the rod (7). The sleeve (S) is maintained on the rod (7), between the springs (M1, M2), by a stop (52) screwed onto the upper end of the rod (7) and, at its lower side, by means of an adjusting nut (53) screwed the lower end of the rod (7). The springs (M1, M2) are preloaded by means of the adjusting nut (53). In practice, each sleeve (S) lies between the upper spring (M1) and the lower spring (M2) within the corresponding column (51). The lower end of each rod (7) crosses the base (5A) and is fixed on an underlying plate (5B). The latter is mounted on guides (9) so as to be able to slide for a run of predetermined length, horizontally, from and to the embossing roller (1). The guides (9) are integral with a fixed frame (6) to which are bound also the ends of the embossing roller (1). The base (5A) has four holes each of which has a diameter sufficient to enable the corresponding rod (7) to slide inside it. In this way, the upper end of the upper spring (M1) and the lower end of the lower spring (M2) are fixed relative to the plate (5B), and then also fixed relative to the frame (6). If a force is applied vertically downwards onto the base (5A), the four lower springs (M2) are compressed through the four columns (51) and the corresponding sleeves (S), for a length proportionate to the force applied. Conversely, a force applied to the movable base (5A) in the sense that pushes it upward, compresses the upper springs (M1) of a length proportionate to the same force. Therefore, the base (5A), when subject to a vertical force applied to it, moves in such a way that the upper springs (M1) or the lower springs (M2) are compressed proportionally to the same force.

The group formed by the motor (2), i.e. the drive member, by the plate (5A) and by the plate (5B) can be moved to and from the roller (1) by means of an actuator with horizontal axis (90) that has the mantle secured to the frame (6) and the stem connected with an appendix (95) of the plate (5B). The extension of the actuator stem (90) determines the approach of the plate (5B) to the embossing roller (1), and then the movement of the motor (2) and the drive pin (31) towards the embossing roller (1). Vice versa, the retraction of said actuator stem implies the removal or disconnection of the driving unit (2, 31) from the roller (1).

The connection between the roller (1) and the driving unit (2, 31) is obtained by approaching the driving unit (2, 31) to the roller (1) to make sure that the pin (31) fits into the hollow end (100) of the roller (1), after which the pin (31) is expanded.

Conversely, to disengage the transmission thus realized, the driving unit (2, 31) is moved away from the roller (1) after contracting the pin (31).

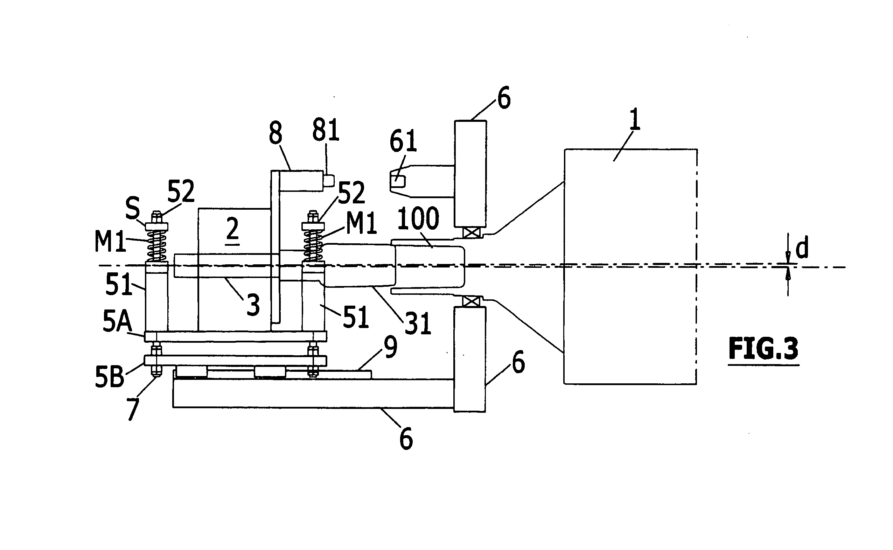

During the connection between the expanding pin (31) and the recess (100), in the case in which the axis (x) of the shaft (3) is misaligned with respect to the axis (r) of the embossing roller (1) - condition schematically indicated by reference "d" in Fig 3 - the contact that takes place between the expanding pin (31) and the recess (100) of the embossing roller (1) gives rise to a force that is transmitted, through the shaft (3) and the driving member (2), to the base (5A). The latter, therefore, thanks to the presence of the springs (M1, M2) moves relative to the lower plate (5B), ie with respect to the frame (6) and the roller (1) which is bound to the same frame. This movement of the base (5A) induced by misalignment (d) takes place until the shaft (3) is not aligned with the embossing roller (1). In other words, thanks to the compensation system described above, the alignment between the axes of the shaft (3) and of the embossing roller (1) takes place automatically during their connection, without requiring any external manual intervention. In fact, the elastic connection between the pin (31) and the frame (6), realized by means of the springs (M1, M2) in the example described above, allows the axis (x) of the group (2, 31) to orient practically according to any direction in space.

In the disconnected transmission configuration, in order to pre-align as much as possible the axes of the shaft (3) and of the embossing roller (1), the adjusting nuts (53) are screwed or unscrewed on the corresponding rods (7) so to raise or lower the axis of the shaft (3) relative to the axis of the roller (1).

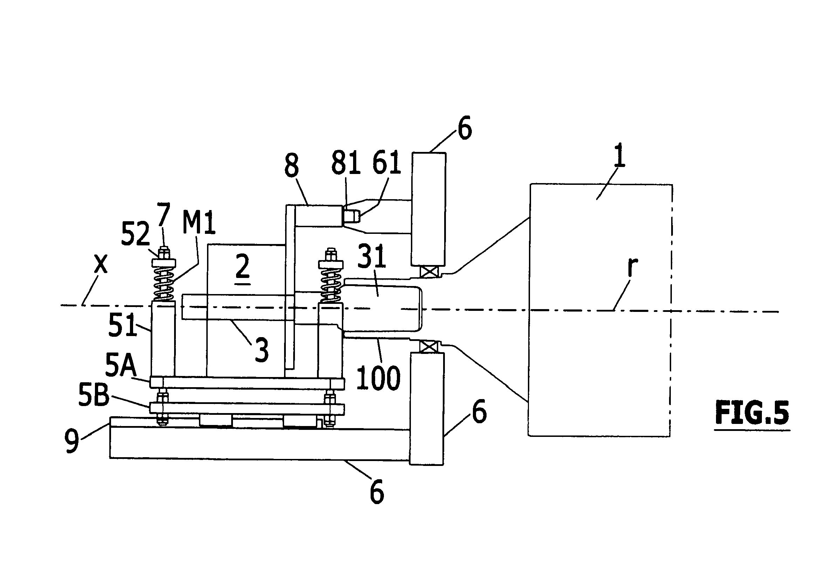

In the final configuration of connection between the expandable drive pin (31) and the embossing roller (1), configuration schematically illustrated in Fig. 5, in order to avoid that the mobile base (5A) oscillates due to the torque transmitted by the drive member (2) to the embossing roller (1), it is used a reaction bar (8) integral with the same drive member (2). The front appendix (81) of the reaction bar (8) being inserted in a slot (61) of the frame (6) makes it integral with the base (5A) to the frame (6). This condition occurs, obviously, when the pin (31) is completely inserted into the recessed end (100) of the roller (1), that is, when the movement of the plate (5A) induced by misalignment (d) is no longer required. It goes without saying that the mutual orientation and dimensions of the appendix (81) of the reaction bar (8) and of the corresponding surface with the recess (61) of the frame (6) are suitably chosen so as to ensure that the base (5A) is integral with the frame (6) only when the pin (31) is fully inserted into the recessed end (100) of the embossing roller (1).

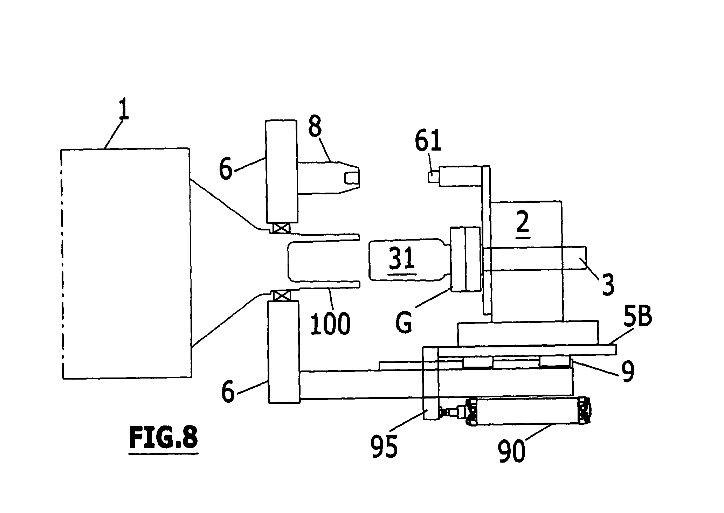

A further example of embodiment of a device in accordance with the present invention, shown in Fig.8, includes the use of a lamellar joint (G) which connects the motor shaft (3) to the expanding pin (31). In this case, the drive member (2) is directly connected on the slide (5B) thanks to which it can move for a predetermined run in the sense that it approaches or departs from the embossing roller (1). In this way, in the case in which the expanding pin (31) is misaligned with the recess (100), during their mating, the contact between the corresponding lateral surfaces gives rise to a transverse force on the shaft (3). This force causes, thanks to the lamellar joint (G), a vertical displacement of the axis of the expanding pin (31) relative to that of the shaft (3), up to reach an alignment of the same expanding pin (31) with the recess (100).

In both the examples described, the said pin (31) is supported by elastic means (M1, M2, G) which allow its automatic alignment with a longitudinal axis (r) of said end (100) of the embossing roller (1) during insertion of the pin (31) in the same end (100).

In practice, the details of execution may vary in any equivalent way as in the shape, size, nature, type and arrangement of the elements indicated, without leaving the scope of the adopted solution and thus remaining within the limits of the protection granted to the present patent.

## Claims

1. Transmission device for embossing rollers, comprising a pin (31) destined to be axially inserted into one end (100) of an embossing roller (1), the said pin (31) being motorized to drag the embossing roller (1) in rotation when it is inserted in said end (100), said pin (31) being is supported by elastic means (M1, M2, G) which allow its automatic alignment with a longitudinal axis (r) of the said end (100) of the embossing roller (1) during insertion of the pin (31) into the same end (100), **characterized in that** said elastic means are constituted by springs (M1, M2) which allow to a base (5A) to move in height in order to align the said pin (31) with the said end (100), the said base (5A) being mounted on guides (9) so as to be able to slide horizontally, on command, for a run of predetermined length, in the sense that distances or approaches the said pin (31) to the said end (100) respectively so as to remove or making the connection between them, and the said pin (31) being constituted by an end of a shaft (3) driven by a motor (2) fixed on said base (5A).

2. Transmission device according to claim 1 **characterized in that** said pin (31) is a hydraulically expanding pin.

3. Transmission device according to claims 1 and 2 **characterized in that** the said end (100) is hollow.

## Patentansprüche

1. Kraftübertragungsvorrichtung für Prägewalzen, die einen Stift (31) umfasst, der dazu dient, in axialer Richtung in das eine Ende (100) einer Prägewalze (1) eingeführt zu werden, wobei dieser Stift mit einem Antriebsmotor versehen ist, um die Prägewalze (1) für eine Drehung anzutreiben, wenn er in das besagte Ende (100) eingeführt ist, wobei der Stift (31) von elastischen Einrichtungen (M1, M2, G) getragen ist, die seine automatische Ausrichtung mit einer Längsachse (r) des besagten Endes (100) der Prägewalze (1) während des Einführens des Stiftes (31) in besagtes Ende (100) ermöglicht, **dadurch gekennzeichnet, dass** die elastischen Einrichtungen von Federn (M1, M2) gebildet werden, die es einer Basis (5A) ermöglichen, sich in Höhenrichtung zu bewegen, um den Stift (31) mit besagtem Ende (100) auszurichten, wobei die Basis (5A) auf Führungen (9) montiert ist, sodass sie in gesteuerter Weise über eine Strecke von vorbestimmter Länge in horizontaler Richtung in der Weise gleiten kann, dass sie den Stift (31) von besagtem Ende (100) weg- bzw. auf dieses zubewegt, um so die Verbindung zwischen ihnen zu lösen oder herzustellen, und dass der Stift (31) vom Ende einer Welle (3) gebildet wird, der von einem an der Basis (5A) befestigten Motor (2) angetrieben wird.

2. Kraftübertragungsvorrichtung nach Anspruch 1, **dadurch gekennzeichnet, dass** der Stift (31) ein hydraulisch vorschiebbarer Stift ist.

3. Kraftübertragungsvorrichtung nach Anspruch 1 und 2, **dadurch gekennzeichnet, dass** besagtes Ende (100) hohl ist.

## Revendications

1. Dispositif de transmission pour cylindres gaufreurs, comprenant un pivot (31) destiné à être inséré axialement dans une extrémité (100) d'un cylindre gaufreur (1), ledit pivot (31) étant motorisée pour conduire le cylindre gaufreur (1) en rotation lorsqu'il est inséré dans ladite extrémité (100), ledit pivot (31) étant supporté par des moyens élastiques (M1, M2, G) qui permettent son alignement automatique avec un axe longitudinal (r) de ladite extrémité (100) du cylindre gaufreur (1) lors de l'insertion du pivot (31) dans le même extrémité (100), **caractérisé en ce que** lesdits moyens élastiques sont constitués par des ressorts (M1, M2) qui permettent à une base (5A) de se déplacer en hauteur en vue d'aligner ledit axe (31) avec ladite extrémité (100), ladite base (5a) étant montée sur des guides (9) de manière à pouvoir coulisser horizontalement, sur commande, pour une course de longueur prédéterminée, en ce sens que elle éloigne ou approche ladite goupille (31) à ladite extrémité (100) respectivement de manière à éliminer ou rendre la connexion entre eux, et ledit pivot (31) étant constituée par une extrémité d'un arbre (3) entraîné par un moteur (2) fixé sur ladite base (5A).

2. Dispositif de transmission selon la revendication 1, **caractérisé en ce que** ledit pivot (31) est un pivot à expansion hydraulique.

3. Dispositif de transmission selon les revendications 1 et 2, **caractérisé en ce que** ladite extrémité (100) est creux.
